# EUROPEAN PATENT APPLICATION

(11) **EP 2 105 922 A1**
(43) Date of publication of application: **30.09.2009**
(21) Application number: 09155430.3
(22) Date of filing: 18.03.2009
(51) Int. Cl.: G11B 7/0045, G11B 7/125, G11B 7/00

(54) **Optical recording method and optical recording apparatus**

(30) Priority: 26.03.2008 JP 2008081532
(71) Applicant: Sony Corporation, Tokyo 108-0075 (JP)
(72) Inventor: Ueda, Daisuke, Tokyo 108-0075 (JP); Iwamura, Takashi, Tokyo 108-0075 (JP)
(74) Representative: Körber, Martin Hans

(57) **Abstract**

Disclosed is an optical recording method. The optical recording method includes emitting laser light from a mode-locked laser light source, modulating a pulse of the laser light during a time period when a recording mark is formed in a medium, and irradiating the medium with the laser light modulated.

## Description

### CROSS REFERENCES TO RELATED APPLICATIONS

The present invention contains subject matter related to Japanese Patent Application JP 2008-081532 filed in the Japanese Patent Office on March 26, 2008, the entire contents of which being incorporated herein by reference.

### Background of the Invention

### 1. Field of the Invention

The present invention relates to an optical recording method and an optical recording apparatus for recording information on a medium by irradiating the medium with light.

### 2. Description of the Related Art

There has been proposed an optical disc for recording a standing wave on a medium as a next-generation optical disc of CDs (Compact Discs), DVDs (Digital Versatile Discs), and Blu-ray discs currently used.

For example, light is focused once on a medium whose refractive index is changed depending on an intensity of irradiation light, and then light is focused again on the same focal position in a reverse direction with a reflector provided on a back surface of the optical disc. As a result, a hologram of a small light-spot size is formed on the medium, to thereby record information.

When the information is reproduced, light reflected by a surface of the optical disc irradiated in the same way is read, to discriminate information.

By recording information on the medium in a layered manner, information items corresponding to those recorded on general optical discs can be collectively recorded on the layers of the medium (see, for example, "Micro-holographic multilayer optical disk data storage" by R. R. McLeod et al., Appl. Opt., Vol. 44, 2005, p.3197).

### Summary of the Invention

However, in a case of, for example, void-formation volumetric recording in which a void is formed in a medium by irradiating the medium with a pulse train for a constant exposure time period with a mode-locked laser (e.g., Ti:S ultrashort pulse laser), there is a problem in that it is difficult to appropriately control a shape of the void in a state where the medium is being rotated.

In view of the above-mentioned circumstances, it is desirable to provide an optical recording method and an optical recording apparatus capable of forming a recording mark having an appropriate shape at an appropriate position of the medium with a mode-locked laser light source.

According to an embodiment of the present invention, there is provided an optical recording method. The optical recording method includes
emitting laser light from a mode-locked laser light source,
modulating a pulse of the laser light during a time period when a recording mark is formed in a medium, and
irradiating the medium with the laser light modulated.

The mode-locked laser light source has a function of emitting ultrashort pulse light (e.g., pulse width within a femtosecond to picosecond order range) at predetermined time intervals. The laser light emitted from the mode-locked laser light source has a significantly small pulse width and a significantly large pulse amplitude, and therefore can be applied to formation of the recording mark on the medium.

In the embodiment, during the time period when the recording mark is formed in the medium, the pulse of the laser light emitted from the mode-locked laser light source is modulated and the medium is irradiated therewith. Therefore, a position on the medium desired to be irradiated with the laser light having a large intensity is irradiated with the laser light having the large intensity, and a position on the medium desired to be irradiated with the laser light having a small intensity is irradiated with the laser light having the small intensity, with the result that the recording mark having an appropriate shape can be formed on an appropriate position on the medium.

The modulating step includes modulating an amplitude of the pulse. With this structure, when a recording mark is formed with a plurality of pulse trains of the laser light emitted from the mode-locked laser light source, the amplitude of a pulse at the center of the pulse train is set to be larger than those at both ends thereof, with the result that the shape of the recording mark can be appropriately controlled.

The modulating step includes modulating a frequency of the pulse. With this structure, when a recording mark is formed with a plurality of pulse trains of the laser light emitted from the mode-locked laser light source, the number of pulses of the pulse train for each predetermined time period is reduced, with the result that an electric energy, a heating value, and power consumption required for the laser emission can be reduced while securing the appropriate formation of the recording mark.

The medium that is rotating is irradiated with the laser light modulated.

With this structure, the medium that is rotating is irradiated with the laser light, and a large number of recording marks can be formed in the medium.

The modulating step includes modulating the laser light so that an amplitude of a pulse at a center of a pulse train that forms the recording mark becomes a peak.

With this structure, the recording mark at the center portion is desirably formed to be larger than the recording marks at both end portions.

The modulating step includes modulating the laser light so that amplitudes of pulses at both ends of a pulse train that forms the recording mark each become a peak.

With this structure, it is possible to form the end portions of the recording mark to be larger than a center portion thereof, that is, a double-ended bell shape, and therefore, a reaction to an edge of the reproduction signal can be enhanced at a time of reproducing the recording mark.

In the modulating step, a semiconductor optical amplifier capable of receiving, amplifying, and outputting the laser light emitted from the mode-locked laser light source is used.

With this structure, when a recording mark is formed with a plurality of pulse trains of the laser light emitted from the mode-locked laser light source, the amplitude of pulses at both ends of the pulse train can be set to be smaller than those of other pulses, with the result that the shape of the recording mark can be appropriately controlled.

In the modulating step, a nonlinear crystal is used for controlling a polarization state of the laser light emitted from the mode-locked laser light source.

With this structure, when the polarization state of the laser light is controlled by applying a voltage to the nonlinear crystal and a recording mark is formed with a plurality of pulse trains of the laser light emitted from the mode-locked laser light source, the medium is irradiated not with the pulses at the both ends of the pulse train but with the other pulses, with the result that the shape of the recording mark can be appropriately controlled.

In the modulating step, a Fabry-Perot interferometer is used when the laser light emitted from the mode-locked laser light source is modulated.

With this structure, the laser light emitted from the mode-locked laser light source is caused to enter the Fabry-Perot interferometer, the laser light is modulated, and the appropriate position on the medium is irradiated with the appropriate laser light, with the result that the recording mark having the appropriate shape can be formed.

According to another embodiment of the present invention, there is provided an optical recording apparatus. The optical recording apparatus includes a mode-locked laser light source to emit laser light at predetermined time intervals, a modulation means for modulating a pulse of the laser light during a time period when a recording mark is formed in a medium, and means for irradiating the medium with the laser light modulated.

In this embodiment, the pulse of the laser light emitted from the mode-locked laser light source is modulated by the modulation means for a time period during which a recording mark is formed in the medium, and the medium is irradiated with the pulse. Therefore, a position of the medium desired to be irradiated with the laser light having a larger intensity is irradiated with the laser light having the larger intensity, and a position thereof desired to be irradiated with the laser light having a smaller intensity is irradiated with the laser light having the smaller intensity, with the result that the recording mark having the appropriate shape can be formed at the appropriate position on the medium.

The modulation means modulates an amplitude of the pulse.

With this structure, when a recording mark is formed with a plurality of pulse trains of the laser light emitted from the mode-locked laser light source, the amplitude of the pulses at both ends of the pulse train that forms the recording mark is set to be smaller than those of the other pulses, with the result that the shape of the recording mark can be appropriately controlled.

The modulation means modulates a frequency of the pulse.

With this structure, when a recording mark is formed with a plurality of pulse trains of the laser light emitted from the mode-locked laser light source, the number of pulses in the pulse train per predetermined time period is reduced, with the result that an electric energy, a heating value, and power consumption required for laser emission can be reduced while ensuring the appropriate formation of the recording mark.

The optical recording apparatus further includes means for rotating the medium to be irradiated with the laser light modulated.

With this structure, the medium that is rotating is irradiated with the laser light, with the result that a large number of recording marks can be formed in the medium.

As described above, according to the embodiments of the present invention, the recording mark having the appropriate shape can be formed at the appropriate position on the medium with the mode-locked laser light source.

These and other objects, features and advantages of the present invention will become more apparent in light of the following detailed description of best mode embodiments thereof, as illustrated in the accompanying drawings.

### Brief Description of Drawings

Fig. 1 is a block diagram showing an optical recording apparatus according to a first embodiment of the present invention;
Fig. 2 is a diagram showing a relationship between a square of a beam intensity of laser light and a size of a recording mark;
Fig. 3 is a flowchart showing an optical recording method using the optical recording apparatus of Fig. 1;
Fig. 4 is a diagram showing a relationship between an irradiation position and an intensity of the laser light amplified by a semiconductor optical amplifier;
Fig. 5A is a cross-sectional diagram showing an exposure history of the recording mark in the first embodiment, Fig. 5B is a cross-sectional diagram showing an exposure history of a recording mark in Comparative Example 1, and Fig. 5C is a cross-sectional diagram showing an exposure history of a recording mark in Comparative Example 2;
Fig. 6A is a cross-sectional diagram showing the recording mark in the first embodiment, Fig. 6B is a cross-sectional diagram showing the recording mark in Comparative Example 1, and Fig. 6C is a cross-sectional diagram showing the recording mark in Comparative Example 2;
Fig. 7 is a diagram showing a relationship between an irradiation position and an intensity of the laser light amplified by the semiconductor optical amplifier according to a second embodiment and a third embodiment;
Fig. 8 is a diagram showing a relationship between an irradiation position and an intensity of the laser light amplified by the semiconductor optical amplifier according to the second embodiment and a fourth embodiment;
Figs. 9A to 9C are cross-sectional diagrams showing the recording marks according to the second to fourth embodiments, respectively, and Figs. 9D and 9E are cross-sectional diagrams showing the recording marks in Comparative Examples 3 and 4, respectively;
Fig. 10 is a diagram showing an optical system of an optical recording apparatus that uses an electro-optical modulator; and
Fig. 11 is a diagram showing an optical system of an optical recording apparatus that uses an acoustooptical modulator.

### Description of Preferred Embodiments

Hereinafter, embodiments of the present invention will be described with reference to the drawings.

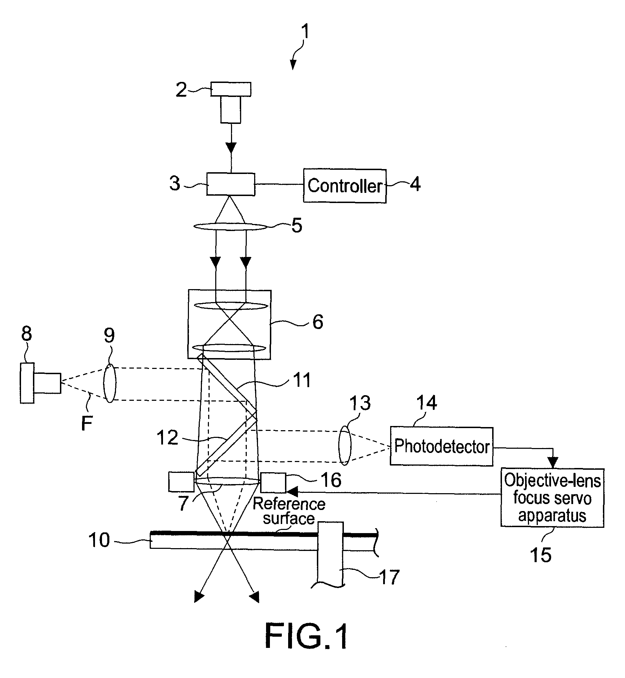

Fig. 1 is a block diagram showing an optical recording apparatus according to a first embodiment of the present invention.

As shown in Fig. 1, an optical recording apparatus 1 includes a mode-locked laser 2, a semiconductor optical amplifier 3, a controller 4, a lens 5, a relay lens 6, an objective lens 7, a servo-only laser 8, a lens 9, a beam splitter 11, a beam splitter 12, a focusing lens 13, a photodetector for a focus servo 14, an objective-lens focus servo apparatus 15, an objective-lens actuator 16, and a spindle 17.

The mode-locked laser 2 generates an ultrashort pulse at predetermined time intervals. The "ultrashort pulse" means that a pulse width thereof falls within a femtosecond to picosecond order range, for example. The laser light has a frequency of 500 MHz and a wavelength of 405 nm and is used for recording. As a laser medium, for example, a Ti:S (titanium-doped sapphire) crystal is used. Therefore, a pulse having a significantly short pulse width and a large peak power can be obtained.

The semiconductor optical amplifier 3 receives the laser light emitted from the mode-locked laser 2, and amplifies the laser light and modulates a frequency thereof based on a control signal from the controller 4, to output the laser light.

The controller 4 outputs to the semiconductor optical amplifier 3 at predetermined time intervals a control signal for controlling an amplification factor of the laser light received by the semiconductor optical amplifier 3, a control signal for modulating the frequency, and the like. The semiconductor optical amplifier 3 and the controller 4 control a timing and amplification factor at which a recording medium 10 is irradiated with the laser light from the mode-locked laser 2.

The lens 5 causes the laser light output from the semiconductor optical amplifier 3 to travel toward the relay lens 6.

The relay lens 6 causes the laser light from the lens 5 to travel toward the objective lens 7 via the beam splitters 11 and 12. The relay lens 6 is also used for adjusting a focal position of the laser light in a thickness direction of the recording medium 10.

The objective lens 7 focuses the incident laser light on the recording medium 10. The objective lens 7 has an NA of 0.85. In a case where a two-photon absorption material is used for the recording medium 10, energy in the vicinity of the focal point is large, so two-photon absorption occurs, thereby forming a void (hole) at the focal position. In contrast, an area apart from the focal point has small energy, so the two-photon absorption does not occur, and thus a void (hole) is not formed.

The servo-only laser 8 emits toward the lens 9 focus servo light F that is used for focus servo only and that has a wavelength of, for example, 630 nm.

The lens 9 causes the focus servo light F to travel toward the beam splitter 11.

The beam splitter 11 reflects the focus servo light F toward the beam splitter 12.

The beam splitter 12 causes the focus servo light F from the beam splitter 11 to pass therethrough. The focus servo light F that has passed through the beam splitter 12 is focused by the objective lens 7 and reflected by a reference surface of the recording medium 10. The reference surface of the recording medium 10 is a wavelength-selective film that reflects the focus servo light F but causes the laser light for recording to pass therethrough. The focus servo light F reflected by the reference surface enters the beam splitter 12 through the objective lens 7. The beam splitter 12 reflects the incident focus servo light F toward the focusing lens 13.

The focusing lens 13 focuses the focus servo light F reflected by the beam splitter 12 on the photodetector 14.

Based on the focus servo light F from the focusing lens 13, the photodetector 14 outputs a signal to the objective-lens focus servo apparatus 15 by an astigmatic method, for example.

Based on the signal from the photodetector 14, the objective-lens focus servo apparatus 15 outputs a control signal for controlling the objective-lens actuator 16.

The objective-lens actuator 16 moves the objective lens 7 to perform focus control based on the control signal from the objective-lens focus servo apparatus 15.

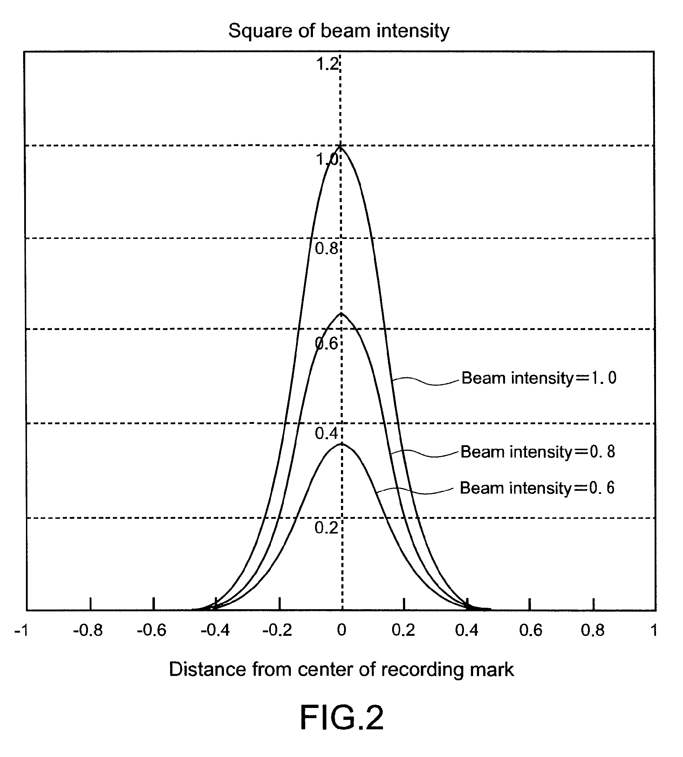

Fig. 2 is a diagram showing a relationship between a square of a beam intensity of the laser light and a size of a recording mark.

As shown in Fig. 2, by adjusting an amplitude (beam intensity) of the irradiation laser light with respect to the recording medium, for example, the size of the recording mark formed on the recording medium can be adjusted.

For example, the two-photon absorption material is used for the recording material, the numerical aperture NA of the objective lens is 0.85, a wavelength of the laser light is 400 nm, and the amplitude (beam intensity) of the laser light that enters the recording medium is standardized by 1.

In this case, when the square of the beam intensity exceeds a threshold value (e.g., 0.2), a void (hole) is formed, and when the amplitude of the laser light is 1, 0.8, and 0.6 (beam intensity: 1.0, 0.8, and 0.6, respectively), the size of the recording mark becomes 0.48 µm, 0.41 µm, and 0.29 µm, respectively. In this way, when the two-photon absorption material is used for the recording medium, a square-law characteristic is obtained, and therefore an excitation can be caused only at the focal position of the recording medium.

Next, a description will be given on a method of optically recording information on the recording medium 10 with the optical recording apparatus 1 shown in Fig. 1.

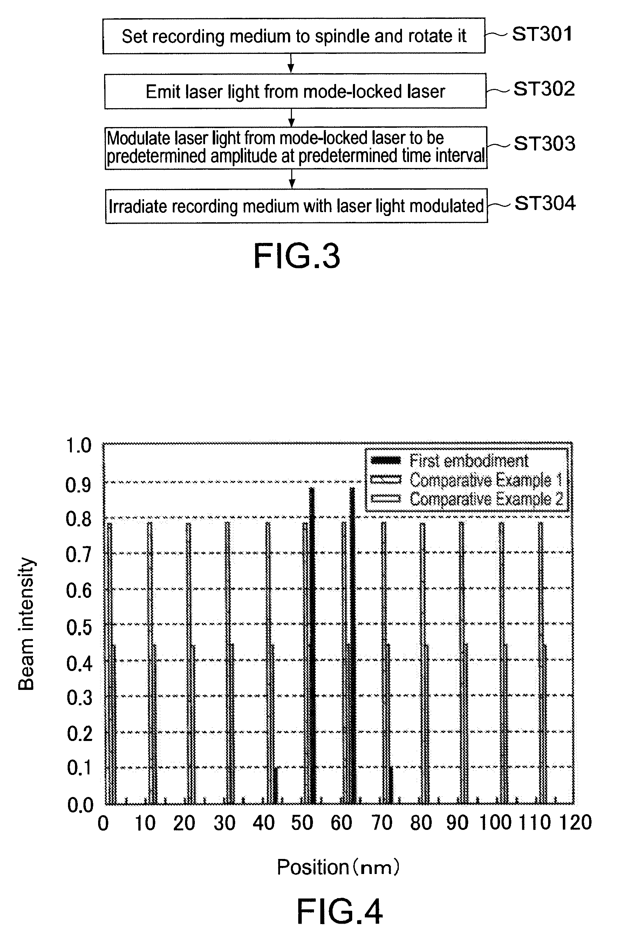

Fig. 3 is a flowchart showing the optical recording method using the optical recording apparatus 1 of Fig. 1, and Fig. 4 is a diagram showing a relationship between an irradiation position and the intensity of the laser light amplified by the semiconductor optical amplifier 3.

As shown in Fig. 1, the recording medium 10 is set on the spindle 17 and is rotated by a drive mechanism (not shown) (ST301). For example, a linear velocity is set to 5 m/s.

The mode-locked laser 2 emits laser light having an ultrashort pulse at predetermined time intervals, for example (ST302).

The controller 4 outputs to the semiconductor optical amplifier 3 a control signal for controlling an amplification factor of an amplitude (of the pulse) of the laser light that has entered the semiconductor optical amplifier 3 at predetermined time intervals. Thus, the amplitude of the pulse of the laser light emitted from the mode-locked laser 2 is modulated at the predetermined time intervals (ST303).

For example, as shown in Fig. 4, in a case where the irradiation position of the recording medium 10 with the laser light ranges from 0 to 40 (nm), the intensity of the laser light passing through the semiconductor optical amplifier 3 is set to 0. In a case where the irradiation position of the recording medium 10 with the laser light ranges from 40 to 50 (nm) and 70 to 80 (nm), the intensity of the laser light passing through the semiconductor optical amplifier 3 is set to 0.1. Further, in a case where the irradiation position of the recording medium 10 with the laser light ranges from 50 to 70 (nm), the intensity of the laser light passing through the semiconductor optical amplifier 3 is set to about 0.9. That is, amplitudes of pulses at both ends of a pulse train for forming a single recording mark G are set to be smaller than those of the other pulses of the pulse train. The pulse at a center of the pulse train for forming the recording mark G has a peak amplitude. Therefore, a length of the recording mark G in an in-plane direction X on the recording surface becomes a desired length L1 (for example, 120 nm).

As shown in Fig. 4, Comparative Example 1 is an example in which the recording medium is irradiated with 12 laser light beams emitted from the mode-locked laser at predetermined time intervals and each having an intensity of approximately 0.8. Comparative Example 2 is an example in which the recording medium is irradiated with 12 laser light beams emitted from the mode-locked laser at predetermined time intervals and each having an intensity of approximately 0.45.

The laser light beams whose intensity has been modulated are focused by the objective lens 7, for example, and the recording medium 10 is irradiated with the laser light beams, to form the recording mark (ST304).

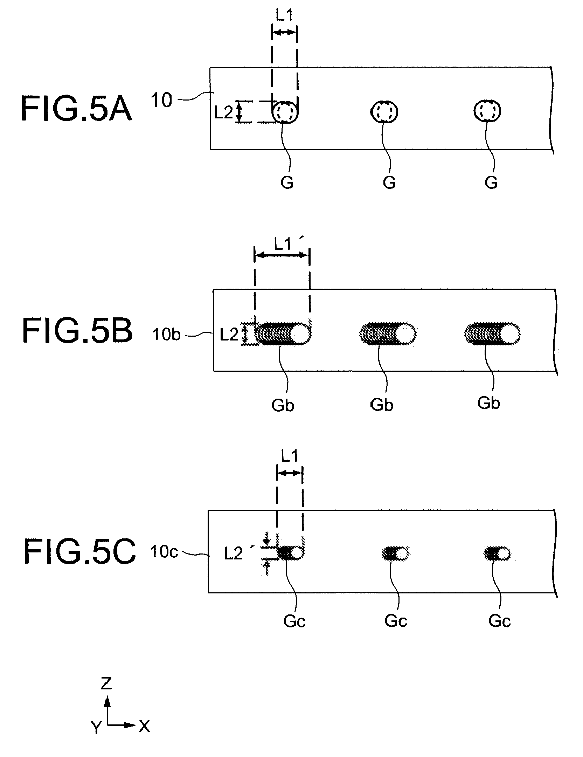

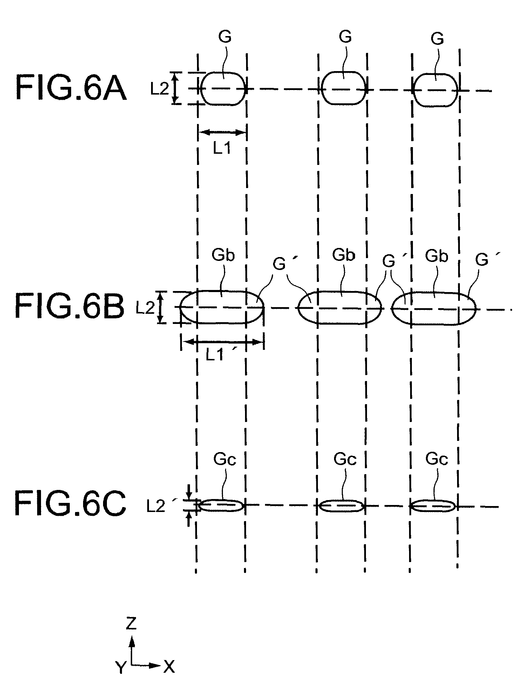

Fig. 5A is a cross-sectional diagram showing an exposure history of the recording mark in this embodiment, Fig. 5B is a cross-sectional diagram showing an exposure history of the recording mark in Comparative Example 1, and Fig. 5C is a cross-sectional diagram showing an exposure history of the recording mark in Comparative Example 2. Fig. 6A is a cross-sectional diagram showing the recording mark in this embodiment, Fig. 6B is a cross-sectional diagram showing the recording mark in Comparative Example 1, and Fig. 6C is a cross-sectional diagram showing the recording mark in Comparative Example 2.

In this embodiment, as shown in Fig. 5A, voids are formed in an overlapping manner while being deviated from each other in the in-plane direction X on the recording surface of the recording medium 10, and as shown in Fig. 6A, a recording mark G having a desired length L1 in the in-plane direction X on the recording surface of the recording medium 10 and a desired length L2 in a thickness direction Z thereof is formed.

In Comparative Example 1, as shown in Fig. 5B, voids are formed in the overlapping manner while being deviated from one another in the in-plane direction X on the recording surface of the recording medium 10, and as shown in Fig. 6B, a recording mark Gb having a length L1' in the in-plane direction X on the recording surface of the recording medium 10 and a length L2 in the thickness direction Z thereof is formed. That is, the recording mark Gb having the desired length L2 in the thickness direction Z and the length L1' longer than the desired length L1 in the in-plane direction X on the recording surface is formed.

In Comparative Example 2, as shown in Fig. 5C, voids are formed in the overlapping manner while being deviated from one another in the in-plane direction X on the recording surface of the recording medium 10, and as shown in Fig. 6C, a recording mark Gc having the length L1 in the in-plane direction X on the recording surface of the recording medium 10 and a length L2' in the thickness direction Z thereof is formed. That is, the recording mark Gc having the desired length L1 in the in-plane direction X on the recording surface and the length L2' shorter than the desired length L2 in the thickness direction Z is formed.

As described above, according to this embodiment, the mode-locked laser 2 emits the laser light at the predetermined time intervals (ST302), the amplitude of the pulse of the laser light emitted is modulated at the predetermined time intervals (every time a time period during which the recording mark is formed on the recording medium 10 passes) by the semiconductor optical amplifier 3 (ST303), and the recording medium 10 that is being rotated is irradiated with the laser light (ST304). Therefore, the position (range of 50 to 70 nm shown in Fig. 4) on the recording medium 10 desired to be irradiated with the laser light having a large intensity is irradiated with the laser light having the large intensity, and the position (ranges of 40 to 50 nm and 70 to 80 nm shown in Fig. 4) thereon desired to be irradiated with the laser light having a small intensity is irradiated with the laser light having the small intensity, with the result that the recording mark G having the appropriate shape (length in the in-plane direction X on the recording surface: L1, length in the thickness direction Z: L2) can be formed on the appropriate position on the recording medium 10.

Accordingly, as shown in Fig. 6B, the length of the recording mark Gb in the in-plane direction X on the recording surface becomes L1' in Comparative Example 1, and therefore an interval between the recording marks Gb in the in-plane direction X on the recording surface is shortened, with the result that a stable signal cannot be detected. In contrast, in this embodiment, as shown in Fig. 6A, the length of the recording mark G in the in-plane direction X on the recording surface can be set to the desired length L1, and thus it can be prevented that an interval between adjacent recording marks G in the in-plane direction X on the recording surface becomes shorter than a predetermined distance. As a result, a stable reproduction signal can be detected from the recording mark G.

Further, as shown in Fig. 6C, in Comparative Example 2, the length of the recording mark Gc in the thickness direction Z becomes L2' that is smaller than L2, and therefore, at the time of reproduction, it becomes difficult for the recording mark Gc to be positively irradiated with the laser light for reproduction, with the result that it becomes difficult for a stable signal to be detected. In contrast, in this embodiment, as shown in Fig. 6A, the length of the recording mark G in the thickness direction Z can be set to the desired length L2 that is larger than L2', and therefore at the time of reproduction, the recording mark G can be positively irradiated with the laser light for reproduction. As a result, a stable reproduction signal can be detected from the recording mark G.

Next, an optical recording method according to a second embodiment will be described. It should be noted that in this embodiment and subsequent ones, the same components and the like as those in the first embodiment are denoted by the same reference symbols, and their descriptions are omitted and different points will be mainly described.

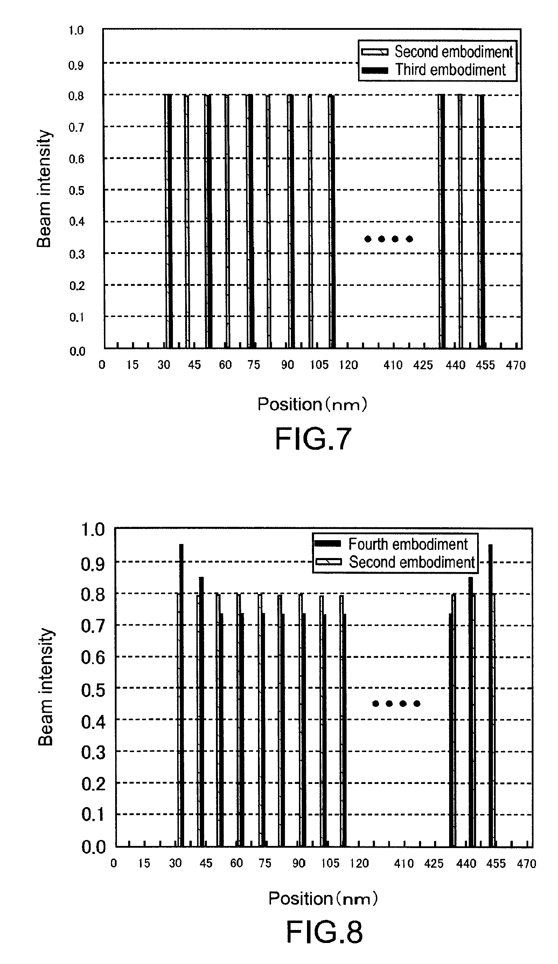

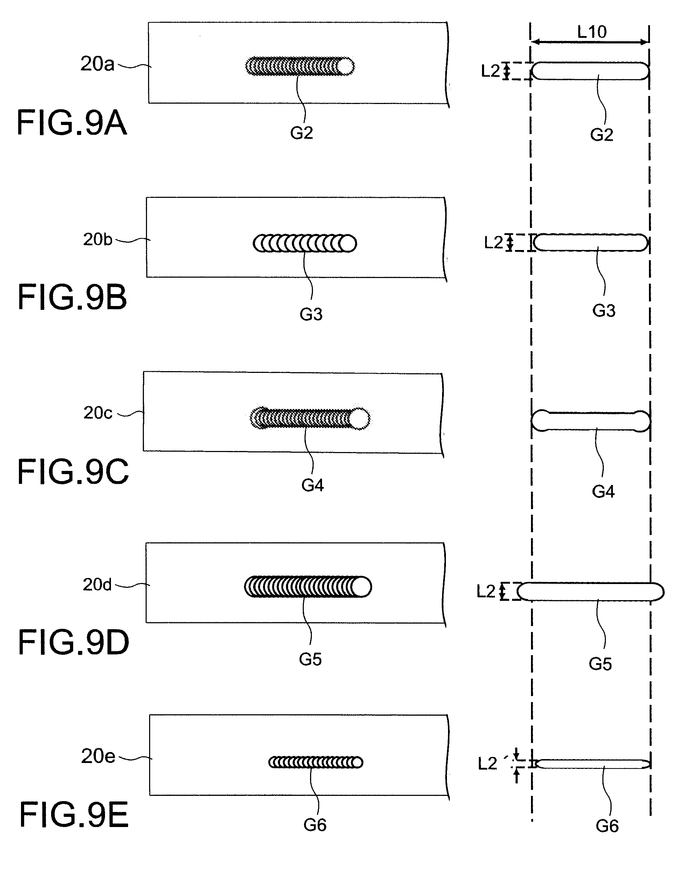

Fig. 7 is a diagram showing a relationship between an irradiation position and an intensity of the laser light amplified by the semiconductor optical amplifier 3 according to the second embodiment and a third embodiment. Fig. 8 is a diagram showing a relationship between an irradiation position and an intensity of the laser light amplified by the semiconductor optical amplifier 3 according to the second embodiment and a fourth embodiment. Figs. 9A to 9C are cross-sectional diagrams showing the recording marks according to the second to fourth embodiments, respectively. Fig. 9D is a cross-sectional diagram showing the recording mark in Comparative Example 3, and Fig. 9E is a cross-sectional diagram showing the recording mark in Comparative Example 4.

As shown in Fig. 7, the second embodiment is different from the first embodiment in that the irradiation position range of the recording medium 10 irradiated with the laser light is extended (the recording mark that is longer in the in-plane direction X on the recording surface is formed).

In this embodiment, the controller 4 outputs to the semiconductor optical amplifier 3 at predetermined time intervals a control signal for controlling the amplification factor of the amplitude (of the pulse) of the laser light that has entered the semiconductor optical amplifier 3. As a result, the amplitude of the pulse of the laser light emitted from the mode-locked laser 2 is modulated at predetermined time intervals so that an intensity thereof becomes approximately 0.8 and a range of the irradiation position falls within 0 to 480 nm.

Thus, as shown in Fig. 9A, voids are formed in an overlapping manner while being deviated from one another in an in-plane direction X on a recording surface of a recording medium 20a, and therefore a recording mark G2 having a desired length L10 in the in-plane direction X on the recording surface of the recording medium 20a and a desired length L2 in the thickness direction Z of the recording medium 20a is formed.

It should be noted that Comparative Example 3 shown in Fig. 9D is different from Comparative Example 1 in that a recording mark G5 formed on a recording medium 20d is longer in the in-plane direction X on the recording surface than the recording mark Gb, and different from the second embodiment shown in Fig. 9A in that the length of the recording mark G5 in the in-plane direction X on the recording surface is longer than the desired length L10. Further, Comparative Example 4 shown in Fig. 9E is different from Comparative Example 2 in that a length of a recording mark G6 of a recording medium 20e is longer in the in-plane direction X on the recording surface than the recording mark Gc, and different from the second embodiment shown in Fig. 9A in that the length of the recording mark G6 is smaller in the thickness direction Z than the desired length L2.

In contrast, in this embodiment, as shown in Fig. 9A, the recording mark G2 having the desired length L10 in the in-plane direction X on the recording surface of the recording medium 20a can be formed.

The third embodiment is different from the second embodiment in that the amplitude of the pulse of the laser light emitted from the mode-locked laser 2 at the predetermined time intervals is modulated and a recording medium 20b is irradiated with the laser light having the intensity of 0.8 at time intervals each of which is twice as much as the predetermined time interval in the second embodiment.

Thus, as shown in Fig. 9B, voids are formed on the recording medium 20b in the overlapping manner in the in-plane direction X on the recording surface with the voids being deviated from one another by a distance twice as long as that in the second embodiment, and a recording mark G3 having the desired length L10 in the in-plane direction X on the recording surface of the recording medium 20b and the desired length L2 in the thickness direction Z of the recording medium 20b is formed.

As a result, the number of pulses in the pulse train per predetermined time period is reduced, thus making it possible to reduce an electric energy, a heating value, and power consumption required for amplification of the laser light while securing the appropriate formation of the recording mark G3.

As shown in Fig. 8, the fourth embodiment is different from the second embodiment in that the laser light is modulated by the semiconductor optical amplifier 3 so that the amplitudes of the pulses on both ends of the pulse train is set to be larger than the amplitudes of the other pulses, to set the intensities of the laser light on both ends to be larger.

As a result, as shown in Fig. 9C, it is possible to form a recording mark G4 on a recording medium 20c into a double-ended bell shape. That is, it is possible to set end portions of the recording mark G4 in the in-plane direction X on the recording surface to be larger than a center portion thereof. Thus, when the recording mark G4 is reproduced, a reaction to an edge of the reproduction signal can be enhanced.

It should be noted that the present invention is not limited to the above embodiments and can be variously modified without departing from the technical idea of the present invention.

In the above embodiments, the semiconductor optical amplifier 3 is used for modulating the pulse of the laser light emitted from the mode-locked laser 2. However, instead of the semiconductor optical amplifier 3, an electro-optical modulator, an acoustooptical modulator, or the like may be used.

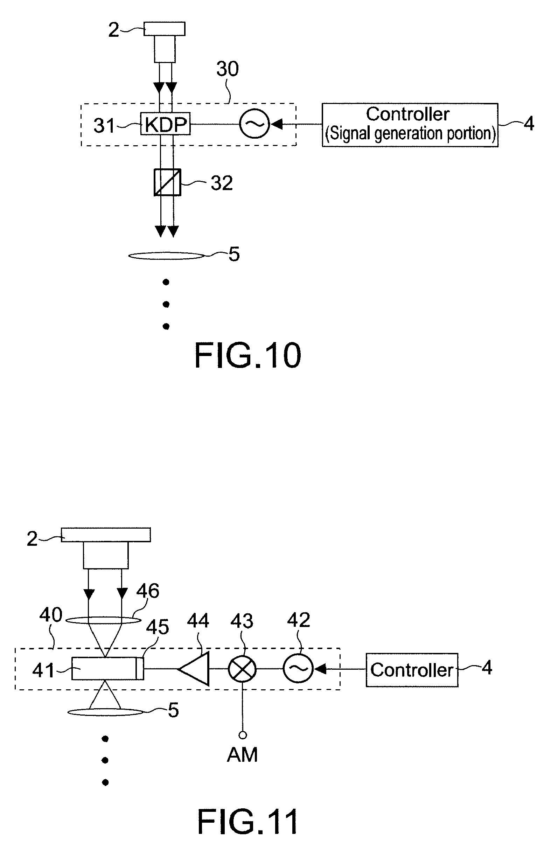

Fig. 10 is a diagram showing an optical system of an optical recording apparatus that uses an electro-optical modulator.

As shown in Fig. 10, instead of the semiconductor optical amplifier 3 shown in Fig. 1, an electro-optical modulator 30 and a polarizer (polarization beam splitter) 32 are disposed between the mode-locked laser 2 and the focusing lens 5.

The electro-optical modulator 30 can apply a voltage to a nonlinear optical crystal (e.g., potassium (kalium) dihydrogen phosphate (KDP) crystal) 31 at predetermined time intervals based on a control signal from the controller 4, for example. Accordingly, by applying the voltage to the nonlinear optical crystal 31 at the predetermined time intervals, a polarization state of the laser light can be controlled and an intensity of light passing through the nonlinear optical crystal 31 can be modulated, for example. As a result, as in the above embodiments, the pulse of the laser light is modulated and the recording medium is irradiated with the laser light, and thus the shape of the recording mark can be appropriately controlled. The polarizer (polarization beam splitter) 32 outputs only a specific polarization component that has passed through the nonlinear optical crystal 31.

A Fabry-Perot interferometer may be used for modulating the laser light emitted from the mode-locked laser. When the Fabry-Perot interferometer is used, the laser light emitted from the mode-locked laser is caused to enter the Fabry-Perot interferometer, the laser light is modulated based on an electrical signal, an appropriate position of the recording medium is irradiated with appropriate laser light, and thus the recording mark having an appropriate shape can be formed.

Fig. 11 is a diagram showing an optical system of an optical recording apparatus that uses an acoustooptical modulator.

As shown in Fig. 11, instead of the semiconductor optical amplifier 3 shown in Fig. 1, an acoustooptical modulator 40 and a lens 46 are disposed between the mode-locked laser 2 and the focusing lens 5.

The acoustooptical modulator 40 includes an acoustooptical material 41 such as gallium phosphide and quartz crystal, an oscillator 42, a mixer 43, an amplifier 44, and a piezoelectric element 45. The acoustooptical material 41 is disposed at a position where the laser light from the mode-locked laser 2 enters. The mixer 43 performs AM modulation on a signal from the oscillator 42. The amplifier 44 amplifies the signal from the mixer 43. The piezoelectric element 45 is driven based on the signal thus amplified. When the piezoelectric element 45 is driven, an acoustic wave can be input to the acoustooptical material 41. Based on an intensity of the acoustic wave input to the acoustooptical material 41, an intensity of light (diffraction light) that passes through the acoustooptical material 41 can be modulated. Thus, the pulse of the laser light is modulated and the recording medium is irradiated with the laser light, with the result that the shape of the recording mark can be appropriately controlled as in the above embodiments. The lens 46 focuses the laser light from the mode-locked laser 2 on the acoustooptical material 41.

In the above embodiments, the amplitude of the pulse of the laser light from the mode-locked laser 2 is modulated. However, instead of the semiconductor optical amplifier 3, the electro-optical modulator may be used for modulating a frequency of the pulse of the laser light from the mode-locked laser 2. By applying the voltage to the nonlinear optical crystal described above, the electro-optical modulator can modulate the frequency of the laser light that passes through the nonlinear optical crystal. As a result, for example, the third embodiment described above can be implemented while reducing an electric energy, a heating value, and power consumption required for the laser emission.

## Claims

1. An optical recording method, comprising:
emitting laser light from a mode-locked laser light source;
modulating a pulse of the laser light during a time period when a recording mark is formed in a medium; and
irradiating the medium with the laser light modulated.

2. The optical recording method according to claim 1,
wherein the modulating step includes modulating an amplitude of the pulse.

3. The optical recording method according to claim 1,
wherein the modulating step includes modulating a frequency of the pulse.

4. The optical recording method according to claim 1,
wherein the modulating step includes modulating the laser light so that an amplitude of a pulse at a center of a pulse train that forms the recording mark becomes a peak.

5. The optical recording method according to claim 1,
wherein the modulating step includes modulating the laser light so that amplitudes of pulses at both ends of a pulse train that forms the recording mark each become a peak.

6. The optical recording method according to one of the claims 1 to 5,
wherein the medium that is rotating is irradiated with the laser light modulated.

7. The optical recording method according to one of the claims 1 to 6,
wherein, in the modulating step, a semiconductor optical amplifier capable of receiving, amplifying, and outputting the laser light emitted from the mode-locked laser light source is used.

8. The optical recording method according to one of the claims 1 to 7,
wherein, in the modulating step, a nonlinear crystal is used for controlling a polarization state of the laser light emitted from the mode-locked laser light source.

9. The optical recording method according to one of the claims 1 to 8,
wherein, in the modulating step, a Fabry-Perot interferometer is used when the laser light emitted from the mode-locked laser light source is modulated.

10. An optical recording apparatus, comprising:
a mode-locked laser light source to emit laser light at predetermined time intervals;
a modulation means for modulating a pulse of the laser light during a time period when a recording mark is formed in a medium; and
means for irradiating the medium with the laser light modulated.

11. The optical recording apparatus according to claim 10,
wherein the modulation means modulates an amplitude of the pulse.

12. The optical recording apparatus according to claim 10,
wherein the modulation means modulates a frequency of the pulse.

13. The optical recording apparatus according to one of the claims 10 to 12, further comprising
means for rotating the medium to be irradiated with the laser light modulated.
